# EUROPEAN PATENT SPECIFICATION

(11) **EP 1 838 071 B1**
(45) Date of publication and mention of the grant of the patent: **27.08.2014**
(21) Application number: 06705455.1
(22) Date of filing: 10.01.2006
(51) Int. Cl.: H04L 29/12, H04L 29/08

(54) **A METHOD FOR IMPLEMENTING THE DATA SYNCHRONIZATION OF THE SERVER AND THE CLIENT SIDE IN THE MECHANISM OF THE DOMAIN NAME SYSTEM**
VERFAHREN ZUR IMPLEMENTIERUNG DER DATENSYNCHRONISATION DER SERVER- UND DER CLIENT-SEITE IN DEM MECHANISMUS DES DOMÄNENNAMENSYSTEMS
PROCEDE PERMETTANT DE METTRE EN OEUVRE LA SYNCHRONISATION DE DONNEES DU SERVEUR ET DU COTE CLIENT DANS LE MECANISME DU SYSTEME DE NOM DE DOMAINE

(30) Priority: 10.01.2005 CN 200510000394
(43) Date of publication of application: 26.09.2007
(73) Proprietor: Huawei Technologies Co., Ltd., Longgang District, Shenzhen Guangdong 518129 (CN)
(72) Inventor: XU, Bo, Huawei Administration Building, Shenzhen, 518129 Guandong (CN)
(74) Representative: Kreuz, Georg Maria
(86) International application number: PCT/CN2006/000032
(87) International publication number: WO 2006/072222

(56) References cited:
- WO-A1-03/107627
- US-B1- 6 411 966
- US-B1- 6 769 031
- VIXIE P ET AL: "RFC 2136 - Dynamic Updates in the Domain Name System (DNS UPDATE)" INTERNET CITATION, [Online] April 1997 (1997-04), XP002174064 Retrieved from the Internet: URL:http://www.cis.ohio-state.edu/cgi-bin/ rfc/rfc2136.txt> [retrieved on 2001-08-06]

## Description

### Field of the Technology

The present invention relates to maintenance technologies of Domain Name System (DNS) mechanism, and particularly, to a method, an apparatus and a system for implementing data synchronization between a server and a client in a DNS mechanism.

### Background of the Invention

At present, data synchronization between servers is implemented through a Notify message defined in a protocol in a DNS mechanism. For example, a master server will initiatively send a Notify message to notify a slave server that a domain file has been updated, after the domain file in the master server is updated. Thus, the data synchronization between the master server and the slave server is maintained.

However, there is no such a synchronization mechanism between a server and a client for guaranteeing the consistency of data between the server and the client. The data means the data resources that are stored in the server and associated with identification information negotiated between the client and the server; the client requests the data resources according to the identification information and the data is also called records. The current data interaction process between the server and the client is described as follows: the client sends a record request to the server for querying for a record, and the server writes the value of Time to Live (TTL) of the record into a response message to be returned to the client to identify the period of validity of the record if the server can find the record requested by the client. Moreover, to improve the efficiency of querying for the record, the client generally stores in its own buffer area the record obtained by querying the server, so when the client needs to use the record next time while the record is still within the period of validity, the client does not need to send the record request to the server again and may directly use the record that is in the buffer area and within the period of validity.

However, the inventor disclosed issues as follows in the design of the present invention. If a record stored in the buffer area of a client is still in the period of validity while the contents corresponding to the record in a server have been changed, the client will use an invalid record, and as a result, the client can not run normally, i.e., the client fails to operate a service. The above problem may be avoided by setting a short value of TTL, but the efficiency of querying for the record by the client cannot be guaranteed.

For example, in Telephone Number Mapping (ENUM), a DNS mechanism is used for querying for a Naming Authority Pointer (NAPTR) resource record. An NAPTR resource record may include the number of a mobile terminal, the number of a phone and information of various terminals of a subscriber. In the ENUM application, the buffer is especially important since it is necessary to query for the information of a subscriber on the Internet while a telecommunication service has a strict requirement in real time. Thus, there is a contradiction, and specifically, if the TTL in a record is too small, the record in the buffer expires soon, i.e., the record is invalid, and thus times to query for the record can not be reduced; if the TTL is too large, the client continues using the original record in the period of validity of the record while the corresponding record in the server is updated, thereby failing to operate a service.

The patent application US-B1-6411966 (2002-06-25) reveals a method for DNS dynamic update to minimize client-server and incremental zone transfer traffic. When a client computer's data changes, the updates to the DNS database in the DNS server are performed with the minimum number of activities, and the minimum amount of data will replicate by sending the minimum content of date replication from one DNS server computer to another server computer.

RFC2136 - "Dynamic Updates in the Domain Name System (DNS UPDATE)" D2 reveals dynamic updates in the DNS system, the dynamic updates are performed between servers, and the feature of modifications to be made according to the message is performed in servers instead of clients.

To sum up, the data asynchrony between a server and a client has become a problem influencing the normal operation of services of the client.

### Summary of the Invention

The present invention provides a method, an apparatus and a system for implementing data synchronization between a server and a client in a DNS mechanism, which is simple and flexible and may maintain the data synchronization between the server and the client and thus guarantee the normal operation in the client.

The technical solution in accordance with the present invention is implemented as follows.

A method for implementing data synchronization between a server and a client in a Domain Name System (DNS) mechanism includes:
receiving, by a server, a record request for querying for a record from a client;
sending, by the server, a response message to the client if the server find the record requested by the client, wherein the response message comprises the record requested by the client and a value of Time to Live, TTL of the record, and the value of TTL is used for identifying the period of validity of the record;
determining, by the server, whether the record is updated in the server within the period of validity of the record stored in a local buffer area of the client;
sending, by the server, a notification message to the client upon determining that the record is updated in the server if the record stored in the local buffer area of the client is in the period of validity, wherein the notification message contains information for identifying the notification message and indicating that the record is updated, and data of the updated record, so that the client deletes the corresponding record in the local buffer area and stores the data of the updated record in the local buffer area according to the notification message.

The method further includes:
storing the notification message in the client; and
the process of deleting the corresponding record in the local buffer area according to the notification message includes:
   deleting the corresponding record in the local buffer area according to the notification message stored in the client.

The notification message is a Notify message; and
the Notify message includes: a confirmation field, an identification field and an information section, contents of the confirmation field being used for verifying whether the Notify message is valid, and contents of the identification field being used for verifying whether there is the corresponding record in the local buffer area required to be updated, and the information section is used for storing the updated record.

The process of deleting the corresponding record in the local buffer area according to the notification message includes:
verifying whether the Notify message is valid based on the contents of the confirmation field in the Notify message;
converting the contents of the identification field in the Notify message into identification information in the client if the Notify message is valid, the identification information corresponding to the contents of the identification field; and
querying for whether there is the corresponding record stored in the local buffer area of the client based on the identification information;
deleting the corresponding record in the local buffer area if there is the corresponding record stored in the local buffer area of the client.

The method further includes:
discarding, by the client, the Notify message upon determining that the Notify message is invalid; or
responding the Notify message containing an error code in the confirmation field of the Notify message to the server upon determining that the Notify message is invalid.

The identification information includes: a number, a number segment, or a domain name.

The confirmation field includes at least one of an Opcode field, a QR field, a QTYPE field, and an RCODE field.

The identification field includes a QNAME field of a Question section; and the contents of the identification field include a domain name or an IP address.

The information section includes an Answer section, an Authority section, or an Additional section.

The process of determining that the record is updated includes:
determining that the data is updated in the server when having received a Notify message issued by another server for indicating that the data is updated; or
determining that the data is updated in the server if an update occurs in a system of the server own.

A system for implementing data synchronization between a server and a client in a Domain Name System (DNS) mechanism includes a server and a client, and
the server is capable of receiving a record request for querying for a record from the client, sending a response message to the client if the server find the record requested by the client, wherein the response message comprises the record requested by the client and a value of Time to Live, TTL of the record, and the value of TTL is used for identifying the period of validity of the record; determining whether the record is updated in the server within the period of validity of the record stored in a local buffer area of the client; sending a notification message to the client upon determining that the record is updated in the server if the record stored in the local buffer area of the client is in the period of validity, and the notification message contains information for identifying the notification message and indicating that the record is updated, and data of the updated record; and
the client is capable of sending the record request for querying for the record to the server, receiving the response message from the server, wherein the response message comprises the record requested by the client and the value of TTL of the record, and the value of TTL is used for identifying the period of validity of the record and deleting the corresponding record in the local buffer area and storing the data of the updated record in the local buffer area according to the notification message received from the server.

The client is further capable of storing the notification message, and deleting the corresponding record in the local buffer area according to the notification message stored in the client.

A client includes:
a unit, capable of sending a record request for querying for a record to a server, and receiving a response message from the server, wherein the response message comprises the record requested by the client and a value of Time to Live, TTL of the record, and the value of TTL is used for identifying the period of validity of the record;
a first unit, capable of receiving a notification message from the server upon the server determining that the record is updated in the server if the record stored in a local buffer area of the client is in the period of validity, wherein the notification message contains information for identifying the notification message and indicating that the record is updated, and data of the updated record,
a second unit, capable of deleting the corresponding record in the local buffer area and storing the data of the updated record in the local buffer area according to the notification message.

The client further includes:
a third unit, capable of storing the notification message, wherein the second unit is further capable of deleting the corresponding record in the local buffer area according to the notification message stored in the third unit.

The client further includes:
a fourth unit, capable of storing the record updated by the server contained in the notification message in the local buffer area.

The first unit further includes:
a fifth unit, capable of receiving the Notify message from the server, wherein the Notify message comprises: a confirmation field an identification field and an information section, and contents of the confirmation field are used for verifying whether the Notify message is valid, and contents of the identification field are used for verifying whether there is the corresponding record in the local buffer area required to be updated, and the information section is used for storing the updated record.

The second unit includes:
a first sub-unit, capable of verifying whether the Notify message is valid based on the contents of the confirmation field in the Notify message;
a second sub-unit, capable of converting the contents of the identification field in the Notify message into identification information in the client if the Notify message is valid, the identification information corresponding to the contents of the identification field; and
a third sub-unit, capable of querying for whether there is the corresponding record stored in the local buffer area of the client based on the identification information;
a fourth sub-unit, capable of deleting the corresponding record in the local buffer area if there is the corresponding record stored in the local buffer area of the client.

A server includes:
a unit, capable of receiving a record request for querying for a record from a client; and sending a response message to the client if the server find the record requested by the client, wherein the response message comprises the record requested by the client and a value of Time to Live, TTL of the record, and the value of TTL is used for identifying the period of validity of the record;
a first unit, capable of determining whether the record is updated in the server within the period of validity of the record stored in a local buffer area of the client;
a second unit, capable of writing information in a notification message for identifying the notification message and indicating that the record is updated and writing the updated record in the notification message upon the first unit determines that the record is updated in the server if the record stored in the local buffer area of the client is in the period of validity; and
a third unit, for sending the notification message to a client, wherein the notification message contains information for identifying the notification message and indicating that the record is updated, and data of the updated record, so that the client deletes the corresponding record in the local buffer area of the client and stores the data of the updated record in the local buffer area according to the notification message.

As can be seen from the above technical solutions, a server sends a notification message indicating that data is updated to the client after a data update occurs in the server, and the client deletes, based on the received notification message, the corresponding record in a buffer area as demanded by itself and requests the updated record from the server again when required to use the record. In accordance with the present invention, the client is also allowed to directly update the record in the buffer area based on the notification message issued by the server so as to use the record next time. The method of the present invention is simple and flexible, and maintains effectively the data synchronization between the server and the client and thus guarantees the normal operation in the client.

### Brief Description of the Drawings

Figure 1 shows a schematic flow chart in accordance with an embodiment of the present invention.
Figure 2 shows a schematic flow chart in accordance with another embodiment of the present invention when applied in the ENUM.

### Embodiments of the Invention

In accordance with the present invention, a server sends a notification message indicating that data is updated to a client if the data is updated in the server, and the client receives the notification message from the server and updates a record stored in the buffer area of the client based on the field information in the notification message.

The present invention is hereinafter further described in detail with reference to the drawings and preferred embodiments to further clarify technical solutions and advantages of the present invention.

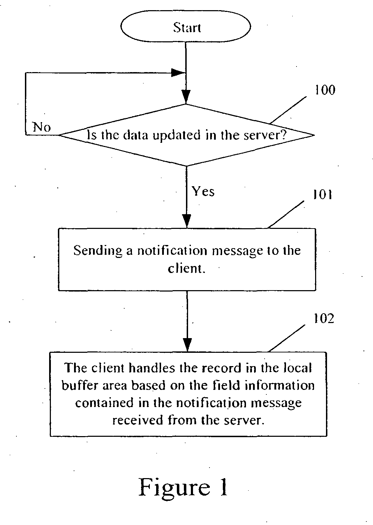

Figure 1 shows the flow chart in accordance with an embodiment of the present invention. As shown in Fig.1, the method in accordance with an embodiment of the present invention includes the process as follows.

Block 100: A server verifies whether data is updated in the server, and perform Block 101 if the data is updated; otherwise, cycle back to Block 100.

In this Block, the server may verify whether the data is updated by verifying whether other servers coupled with the server have issued to the server a notification message indicating that a record is updated, and specifically, the server determines that the data is updated in the server if the server has received the notification message issued by other servers; or it may be indicated that the data is updated in the server, if the record of the server has been changed, for example, the record is updated by the administrator or by the system of the server own periodically.

Block 101: The server sends a notification message indicating that the data is updated to the client.

A Notify message used between servers in a DNS mechanism, or a message, the message format and the message contents of which are acquired through negotiation between the server and the client, may be used as the notification message indicating that the data is updated in this Block.

Besides the property parameters of the notification message, the notification message also contains the domain name or the IP address of the corresponding server in which a record is updated; the property parameters include a response to a request message and a message indicating whether a query is successful or not. Moreover, the notification message may also contain the contents of the updated record.

Block 102: The client handling the record in the local buffer area based on the field information in the notification message issued by the server.

The field information in this Block includes a confirmation field and an identification field contents of The confirmation field are used for verifying whether the notification message is valid and contents of the identification field are used for verifying whether there is the corresponding record stored in the client needs to be updated, and may also include an information section for storing the updated data in the server.

After determining, based on the confirmation field, that the notification message is valid, the client may handle the record in the buffer area with the two methods as follows: one is that if the notification message does not contain the contents of the updated record, the client deletes the record and requests a new record from the server when required to use the record; the other is that it the notifcation message contains the contents of the updated record, the client deletes the record and stores the contents of the updated record contained in the notification message for use.

The method in accordance with an embodiment of the present invention is hereinafter further described by taking the application of the ENUM in the DNS mechanism as an example.

An existing Notify message to be used in the present embodiment is introduced in brief before the description is given.

The format of the Notify message is shown in Table 1.

**Table 1**

| Name | Meaning |
|---|---|
| Header | The head section of the Notify message |
| Question | The question section of the Notify message |
| Answer | The answer section of the Notify message |
| Authority | The authority section of the Notify message |
| Additional | The additional section of the Notify message |

The definition of the Header section is shown in Table 2.

**Table 2**

| Name of field | Meaning and requirements |
|---|---|
| ID | The identification of the message, established by the client in a general message |
| QR | The type of the message, wherein QR = 0 indicating that the message is a request message; QR = 1 indicating that the message is a response message. |
| Opcode | The type of the query, such as a standard query and an inverse query, the vale of the Opcode being defined as 4 in the Notify message between servers. |
| AA | In a response, vale 1 indicating that the server is an authorized name server. This field is set to 1 as requested in the Notify message between servers to indicated that the query is answered by an authority server. In the present embodiment, it is suggested but not requested that the field is set to 1. |
| TC | Being set to 1 when the length of the message is beyond a limit. |
| RD | Value 1 indicating that the server is requested to perform a recursive query. |
| RA | Being set to 1 in the response when the server completes the recursive query. |
| Z | Unused. |
| RCODE | Indicating the result of the query. Value 0 indicating that the query is successful; otherwise, indicating corresponding error codes. |
| QDCOUNT | The number of the entries of the Question section. |
| ANCOUNT | The number of the entries of the Answer section. |
| NSCOUNT | The number of the entries of the Authority section. |
| ARCOUNT | The number of the entries of the Additional section. |

Each of Question, Answer, Authority and Additional in Table 1 includes three fields respectively: NAME, TYPE and CLASS field. For example, the Question includes three fields, QNAME, QTYPE and QCLASS, and the QNAME is a query domain name; the QTYPE is the type of the query. For example, in the Notify message between servers, the QTYPE is set to 6 to indicate a Start Of Authority (SOA); the QCLASS is the network class of the query; when applied to the Internet, the value of the QCLASS is set to 1.

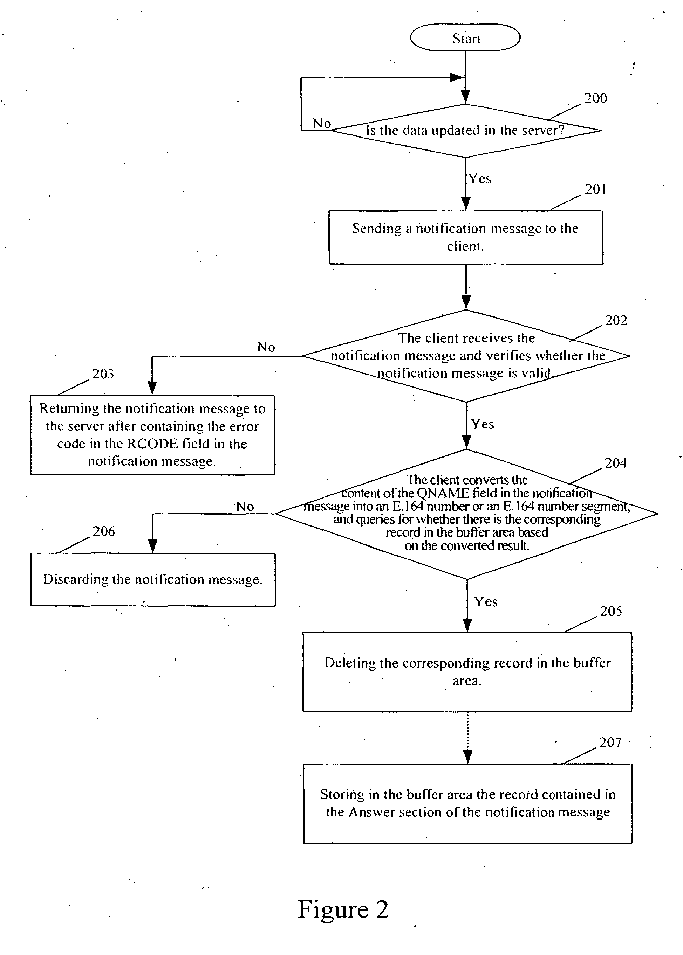

Figure 2 shows a schematic flow chart in accordance with an embodiment of the present invention applied in an ENUM. As shown in Figure 2, the application of ENUM in a DNS mechanism in accordance with an embodiment of the present invention includes the Blocks as follows.

Block 200: A server verifies whether data is updated in the server, and perform Block 201 if the data is updated; otherwise, cycle back to Block 200.

Block 201: The server sends to the client a notification message indicating that the data is updated.

In this Block, it is supposed that the server sends a Notify message to the client to notify the client. The contents of the message are shown in Table 3.

**Table 3**

| Name of field | Meaning and requirements |
|---|---|
| ID | The Notify message in an embodiment of the present invention is sent by the server to the client, so the ID is established by the server is an embodiment of the present invention. |
| QR | QR=0. |
| Opcode | The field may be set to 4 in an embodiment of the present invention; or be defined as other values acquired through negotiation between the client and the server. |
| AA | Supposing that the server in an embodiment of the present invention is an authorized name server, AA = 1. |
| TC | Supposing that the length of the message is not beyond a limit, that is TC = 0. |
| RD | RD = 1. |
| RA | Being set to 1 in the response when the server completes a recursive query. |
| Z | Unused. |
| RCODE | Supposing that the vale is 0. |
| QDCOUNT | The vale is 1. |
| ANCOUNT | The vale is 0. |
| NSCOUNT | The vale is 0. |
| ARCOUNT | The vale is 0. |

The value of the QDCOUNT field in Table 3 is 1, which indicates that the number of entries in the Question section is 1, i.e., there is a query domain name, the QNAME, in the Question section. The corresponding value of the type of the query for the domain name, QTYPE, is 35 since an NAPTR record is queried for in an embodiment. The value of the class of the query, QCLASS, is I since an embodiment is applied to the Internet.

Block 202: In response to the notification message indicating the data is updated sent from the server, the client verifies whether the notification message is valid; and proceed to Block 204 if the notification message is valid; otherwise, perform Block 203.

In this Block, the client verifies, by checking a confimiation field in the Notify message, such as the QR field, the Opcode field, the RCODE field, and the QTYPE field, whether the notification message is valid.

For the check of the QR field, if QR = 0, it is indicated that the notification message is a request message sent by the server to the client, which is valid and accords with the property of the notification message. In other words, the notification message is the request message sent by the server on its own initiative to the client; if QR = 1, the client determines that the notification message is invalid.

For the check of the Opcode field, if Opcode = 4, the client determines that the notification message is valid; otherwise, the client determines that the notification message is invalid. It should be noted that the value of the Opcode may be value defined in the present embodiment: 4, and may also be a value acquired through a negotiation between the server and the client only if there is no conflict between the value of the Opcode and values that have be defined in use.

For the check of the RCODE field, if RCODE = 0, it is indicated that the result of the query by the server is correct, i.e., the notification message is valid; if RCODE . = error code, the client determines that the notification message is invalid.

For the check of the QTYPE field, the client verifies whether the QTYPE is equal to 35, and if yes, the client determines that the notification message is valid; , otherwise, the client determines that the notification message is invalid.

Block 203: The client responds the notification message to the server after inserting an error code in the RCODE field in the notification message.

The client returns a response message containing the error code to the server after determining that the notification message issued by the server is invalid.

Blocks 204 ~ 205: The client converts the contents of the identification field in the notification message, such as a domain name, into identification information in the client, such as an E.164 number or an E.164 number segment, wherein the identification information corresponds to the contents of the identification field; queries for, based on the E.164 number or the E.164 number segment, whether the corresponding record is stored in the buffer of the client; and if there is the record, the client deletes the record and terminate this process; otherwise, perform Block 206.

The identification field in the Notify message in the present embodiment is a QNAME field in which there is an E.164 number denoted with a domain name, and the client queries for, through the domain name in the QNAME field, whether the record corresponding to the domain name is stored in the buffer area of the client.

Specifically, supposing that the domain name in the QNAME field in the Notify message issued by the server to the client is 1.2.3.4.5.6.7.8.9.6.8.e164.arpa., the identification information converted from the domain name is the E.164 number, i.e., 86987654321. The client locally queries for the record corresponding to the E.164 number in the buffer area of the client, and deletes the record if there is the record.

The contents of the QNAME field may also correspond to a number segment, such as 6.7.8.9.6.8.e164.arpa., and in this case, the records in the buffer area, corresponding to the number segment 869876xxxxx, are all to be deleted. In practice, it is determined which method is to be adopted by means of the requirement of an application service.

In addition, the contents of the QNAME field may also be an IP address, a domain name, etc.

Block 206: The client discards the notification message and terminates the handling of the Notify message.

To sum up, the server issues the notification message to the client when the data is updated, and the client queries for the related record and deletes the related record based on the received notification message. Thus, it is guaranteed that the client can use a valid record in the buffer area. The client needs to request the updated record from the server again when required to use the deleted record, which guarantees the normal operation in the client and maintains the data synchronization between the server and the client effectively.

In the Blocks of the present embodiment, through receiving the notification message issued by the server, the client may not need to verify whether the notification message is valid, to convert the notification message, to verify whether the record corresponding to the notification message is stored locally, and to delete the corresponding record. Likewise, the client does not need to return the notification message to the server after writing the error code in the notification message. The client may further perform the above handling based on the stored notification message when required to use the related record again.

Of course, if the server writes the updated record into the information section of the Notify message, such as the Answer section, the Authority section or the Additional section, the client may store the notification message locally when receiving the notification message issued by the server, and update the record based on the notification message when required to use the corresponding record, or the client may perform Block 207 after deleting the record in Blocks 204 ~ 205 and before terminating this procedure.

Block 207: Storing the updated record contained in the Answer section of the notitication message locally.

The updated record may be contained in the Answer section, Authority, section and Additional section. In the present embodiment, it is supposed that the updated record is contained in the Answer section. Thus, the client does not need to request the record from the server and may directly use the record, when required to use the record again. Undoubtedly, with such handling in accordance with an embodiment of the present invention, the efficiency of querying the record by the client is further improved.

The foregoing is only preferred embodiments of the present invention and is not for use in limiting the protection scope thereof.

## Claims

1. A method for implementing data synchronization between a server and a client in a Domain Name System, mechanism, comprising:
receiving, by a server, a DNS record request for querying for a record from a client;
sending, by the server, a response message to the client if the server find the record requested by the client, wherein the response message comprises the record requested by the client and a value of Time to Live, TTL of the record, and the value of TTL is used for identifying the period of validity of the record;
determining (100, 200), by the server, whether the record is updated in the server within the period of validity of the record stored in a local buffer area of the client;
sending (101, 201), by the server, a notification message to the client upon determining that the record is updated in the server if the record stored in the local buffer area of the client is in the period of validity, wherein the notification message contains information for identifying the notification message and indicating that the record is updated, and the updated record, so that the client deletes (102, 205) the corresponding record in the local buffer area and stores the updated record in the local buffer area according to the notification message.

2. The method of Claim 1, further comprising:
storing (207) the notification message in the client; wherein
the process of deleting (205) the corresponding record in the local buffer area according to the notification message comprises:
deleting (205) the corresponding record in the local buffer area according to the notification message stored in the client.

3. The method of any of Claims 1 to 2, wherein the notification message is a Notify message; and
the Notify message comprises: a confirmation field, an identification field and an information section, wherein contents of the confirmation field are used for verifying whether the Notify message is valid, and contents of the identification field are used for verifying whether there is the corresponding record in the local buffer area required to be updated, and the information section is used for storing the updated record.

4. The method of Claim 3, wherein the process of deleting (205) the corresponding record in the local buffer area according to the notification message comprises:
verifying (202) whether the Notify message is valid based on the contents of the confirmation field in the Notify message;
converting (204) the contents of the identification field in the Notify message into identification information in the client if the Notify message is valid, wherein the identification information corresponds to the contents of the identification field; and
querying (204) for whether there is the corresponding record stored in the local buffer area of the client based on the identification information;
deleting (205) the corresponding record in the local buffer area if there is the corresponding record stored in the local buffer area of the client.

5. The method of Claim 4, further comprising:
discarding (206), by the client, the Notify message upon determining that the Notify message is invalid; or
responding (203) the Notify message containing an error code in the confirmation field of the Notify message to the server upon determining that the Notify message is invalid.

6. The method of Claim 3, wherein the identification information comprises: a number, a number segment, or a domain name.

7. The method of Claim 3, wherein the confirmation field comprises at least one of an Opcode field, a QR field, a QTYPE field, and an RCODE field.

8. The method of Claim 3, wherein the identification field comprises a QNAME field of a Question section; and the contents of the identification field comprise a domain name or an IP address.

9. The method of Claim 3, wherein the information section comprises an Answer section, an Authority section, or an Additional section.

10. The method of any of Claims 1 to 9, wherein the process of determining (100, 200) that the record is updated comprises:
determining that the record is updated in the server when having received a Notify message issued by another server for indicating that the record is updated; or
determining that the record is updated in the server if an update occurs in a system of the server own.

11. A system for implementing data synchronization between a server and a client in a Domain Name System, mechanism, comprising a server and a client, **characterized in that**, wherein:
the server is capable of receiving a DNS record request for querying for a record from the client, sending a response message to the client if the server find the record requested by the client, wherein the response message comprises the record requested by the client and a value of Time to Live, TTL of the record, and the value of TTL is used for identifying the period of validity of the record; determining whether the record is updated in the server within the period of validity of the record stored in a local buffer area of the client; sending a notification message to the client upon determining that the record is updated in the server if the record stored in the local buffer area of the client is in the period of validity, and the notification message contains information for identifying the notification message and indicating that the record is updated, and the updated record; and
the client is capable of sending the record request for querying for the record to the server, receiving the response message from the server, wherein the response message comprises the record requested by the client and the value of TTL of the record, and the value of TTL is used for identifying the period of validity of the record and deleting the corresponding record in the local buffer area and storing the updated record in the local buffer area according to the notification message received from the server.

12. The system of Claim 11, wherein the client is further capable of storing the notification message, and deleting the corresponding record in the local buffer area according to the notification message stored in the client.

13. A client of a Domain Name System, DNS, comprising:
a unit, capable of sending a DNS record request for querying for a record to a server, and receiving a response message from the server, wherein the response message comprises the record requested by the client and a value of Time to Live, TTL of the record, and the value of TTL is used for identifying the period of validity of the record;
a first unit, capable of receiving a notification message from the server upon the server determining that the record is updated in the server if the record stored in a local buffer area of the client is in the period of validity, wherein the notification message contains information for identifying the notification message and indicating that the record is updated, and the updated record,
a second unit, capable of deleting the corresponding record in the local buffer area and storing the updated record in the local buffer area according to the notification message.

14. The client of Claim 13, further comprising:
a third unit, capable of storing the notification message, wherein the second unit is further capable of deleting the corresponding record in the local buffer area according to the notification message stored in the third unit.

15. The client of Claim 13 or 14, further comprising:
a fourth unit, capable of storing the record updated by the server contained in the notification message in the local buffer area.

16. The client of Claim 13 or 14 or 15, wherein the first unit further comprises:
a fifth unit, capable of receiving the Notify message from the server, wherein the Notify message comprises: a confirmation field an identification field and an information section, and contents of the confirmation field are used for verifying whether the Notify message is valid, and contents of the identification field are used for verifying whether there is the corresponding record in the local buffer area required to be updated, and the information section is used for storing the updated record.

17. The client of Claim 16, wherein the second unit comprises:
a first sub-unit, capable of verifying whether the Notify message is valid based on the contents of the confirmation field in the Notify message;
a second sub-unit, capable of converting the contents of the identification field in the Notify message into identification information in the client if the Notify message is valid, wherein the identification information corresponds to the contents of the identification field; and
a third sub-unit, capable of querying for whether there is the corresponding record stored in the local buffer area of the client based on the identification information;
a fourth sub-unit, capable of deleting the corresponding record in the local buffer area if there is the corresponding record stored in the local buffer area of the client.

18. A server of a Domain Name System, DNS, comprising:
a unit, capable of receiving a DNS record request for querying for a record from a client; and sending a response message to the client if the server find the record requested by the client, wherein the response message comprises the record requested by the client and a value of Time to Live, TTL of the record, and the value of TTL is used for identifying the period of validity of the record;
a first unit, capable of determining whether the record is updated in the server within the period of validity of the record stored in a local buffer area of the client;
a second unit, capable of writing information in a notification message for identifying the notification message and indicating that the record is updated and writing the updated record in the notification message upon the first unit determines that the record is updated in the server if the record stored in the local buffer area of the client is in the period of validity; and
a third unit, for sending the notification message to a client, wherein the notification message contains information for identifying the notification message and indicating that the record is updated, and data of the updated record, so that the client deletes the corresponding record in the local buffer area of the client and stores the data of the updated record in the local buffer area according to the notification message.

## Patentansprüche

1. Verfahren zum Implementieren von Datensynchronisation zwischen einem Server und einem Client in einem Domänennamensystem-Mechanismus, DNS-Mechanismus, wobei das Verfahren Folgendes umfasst:
Empfangen einer DNS-Datensatzanforderung zum Abfragen nach einem Datensatz von einem Client durch einen Server;
Senden einer Antwortnachricht an den Client durch den Server, falls der Server den durch den Client angeforderten Datensatz findet, wobei die Antwortnachricht den durch den Client angeforderten Datensatz und einen Wert der Lebensdauer (Time to Live, TTL) des Datensatzes umfasst und wobei der Wert der TTL dazu verwendet wird, die Gültigkeitsdauer des Datensatzes zu identifizieren;
Bestimmen (100, 200), ob der Datensatz in dem Server innerhalb der Gültigkeitsdauer des in einem lokalen Pufferbereich des Clients gespeicherten Datensatzes aktualisiert worden ist, durch den Server;
Senden (101, 201) einer Benachrichtigungsnachricht an den Client durch den Server bei Bestimmung, dass der Datensatz in dem Server aktualisiert worden ist, falls der in dem lokalen Pufferbereich des Clients gespeicherte Datensatz in der Gültigkeitsdauer liegt, wobei die Benachrichtigungsnachricht Informationen, um die Benachrichtigungsnachricht zu identifizieren und um anzugeben, dass der Datensatz aktualisiert worden ist, und den aktualisierten Datensatz enthält, so dass der Client gemäß der Benachrichtigungsnachricht den entsprechenden Datensatz in dem lokalen Pufferbereich löscht (102, 205) und den aktualisierten Datensatz in dem lokalen Pufferbereich speichert.

2. Verfahren nach Anspruch 1, das ferner Folgendes umfasst:
Speichern (207) der Benachrichtigungsnachricht in dem Client; wobei der Prozess des Löschens (205) des entsprechenden Datensatzes in dem lokalen Pufferbereich gemäß der Benachrichtigungsnachricht Folgendes umfasst:
Löschen (205) des entsprechenden Datensatzes in dem lokalen Pufferbereich gemäß der in dem Client gespeicherten Benachrichtigungsnachricht.

3. Verfahren nach einem der Ansprüche 1 bis 2, wobei die Benachrichtigungsnachricht eine "Notify"-Nachricht ist; und
die "Notify"-Nachricht Folgendes umfasst: ein Bestätigungsfeld, ein Identifizierungsfeld und einen Informationsabschnitt, wobei der Inhalt des Bestätigungsfelds dafür verwendet wird zu überprüfen, ob die "Notify"-Nachricht gültig ist, und der Inhalt des Identifizierungsfelds dafür verwendet wird zu überprüfen, ob der entsprechende Datensatz in dem lokalen Pufferbereich aktualisiert werden muss, und wobei der Informationsabschnitt zum Speichern des aktualisierten Datensatzes verwendet wird.

4. Verfahren nach Anspruch 3, wobei der Prozess des Löschens (205) des entsprechenden Datensatzes in dem lokalen Pufferbereich gemäß der Benachrichtigungsnachricht Folgendes umfasst:
Überprüfen (202), ob die "Notify"-Nachricht gültig ist, auf der Grundlage des Inhalts des Bestätigungsfelds in der "Notify"-Nachricht;
Umsetzen (204) des Inhalts des Identifizierungsfelds in der "Notify"-Nachricht in Identifizierungsinformationen in dem Client, falls die "Notify"-Nachricht gültig ist,
wobei die Identifizierungsinformationen dem Inhalt des Identifizierungsfelds entsprechen; und
Abfragen (204), ob der entsprechende Datensatz in dem lokalen Pufferbereich des Clients gespeichert ist, auf der Grundlage der Identifizierungsinformationen;
Löschen (205) des entsprechenden Datensatzes in dem lokalen Pufferbereich, falls der entsprechende Datensatz in dem lokalen Pufferbereich des Clients gespeichert ist.

5. Verfahren nach Anspruch 4, das ferner Folgendes umfasst:
Verwerfen (206) der "Notify"-Nachricht bei Bestimmung, dass die "Notify"-Nachricht ungültig ist, durch den Client; oder
Beantworten (203) der "Notify"-Nachricht, die in dem Bestätigungsfeld der "Notify"-Nachricht an den Server einen Fehlercode enthält, bei Bestimmung, dass die "Notify"-Nachricht ungültig ist.

6. Verfahren nach Anspruch 3, wobei die Identifizierungsinformationen Folgendes umfassen: eine Zahl, ein Zahlensegment oder einen Domänennamen.

7. Verfahren nach Anspruch 3, wobei das Bestätigungsfeld ein "Opcode"-Feld und/oder ein QR-Feld und/oder ein QTYPE-Feld und/oder ein RCODE-Feld umfasst.

8. Verfahren nach Anspruch 3, wobei das Identifizierungsfeld ein QNAME-Feld eines "Question"-Abschnitts umfasst; und wobei der Inhalt des Identifizierungsfelds einen Domänennamen oder eine IP-Adresse umfasst.

9. Verfahren nach Anspruch 3, wobei der Informationsabschnitt einen "Answer"-Abschnitt, einen "Authority"-Abschnitt oder einen "Additional"-Abschnitt umfasst.

10. Verfahren nach einem der Ansprüche 1 bis 9, wobei der Prozess zum Bestimmen (100, 200), dass der Datensatz aktualisiert worden ist, Folgendes umfasst:
Bestimmen, dass der Datensatz in dem Server aktualisiert worden ist, wenn eine durch einen anderen Server ausgegebene "Notify"-Nachricht, um anzugeben, dass der Datensatz aktualisiert worden ist, empfangen worden ist; oder
Bestimmen, dass der Datensatz in dem Server aktualisiert worden ist, falls eine Aktualisierung in einem System des Servers selbst stattfindet.

11. System zum Implementieren von Datensynchronisation zwischen einem Server und einem Client in einem Domänennamensystem-Mechanismus, DNS-Mechanismus, wobei das System einen Server und einen Client umfasst, **dadurch gekennzeichnet, dass**:
der Server eine DNS-Datensatzanforderung zum Abfragen nach einem Datensatz von dem Client empfangen kann, eine Antwortnachricht an den Client senden kann, falls der Server den durch den Client angeforderten Datensatz findet, wobei die Antwortnachricht den durch den Client angeforderten Datensatz und einen Wert der Lebensdauer, TTL, des Datensatzes umfasst und wobei der Wert der TTL dazu verwendet wird, die Gültigkeitsdauer des Datensatzes zu identifizieren; bestimmen kann, ob der Datensatz innerhalb der Gültigkeitsdauer des in einem lokalen Pufferbereich des Clients gespeicherten Datensatzes in dem Server aktualisiert worden ist; bei Bestimmung, dass der Datensatz in dem Server aktualisiert worden ist, eine Benachrichtigungsnachricht an den Client senden kann, falls der in dem lokalen Pufferbereich des Clients gespeicherte Datensatz in der Gültigkeitsdauer liegt, und wobei die Benachrichtigungsnachricht Informationen, um die Benachrichtigungsnachricht zu identifizieren und um anzugeben, dass der Datensatz aktualisiert worden ist, und den aktualisierten Datensatz enthält; und
der Client die Datensatzanforderung zum Abfragen nach dem Datensatz an den Server senden kann, die Antwortnachricht von dem Server empfangen kann, wobei die Antwortnachricht den durch den Client angeforderten Datensatz und den Wert der TTL des Datensatzes umfasst und wobei der Wert der TTL dazu verwendet wird,
gemäß der von dem Server empfangenen Benachrichtigungsnachricht die Gültigkeitsdauer des Datensatzes zu identifizieren und den entsprechenden Datensatz in dem lokalen Pufferbereich zu löschen und den aktualisierten Datensatz in dem lokalen Pufferbereich zu speichern.

12. System nach Anspruch 11, wobei der Client ferner die Benachrichtigungsnachricht speichern kann und gemäß der in dem Client gespeicherten Benachrichtigungsnachricht den entsprechenden Datensatz in dem lokalen Pufferbereich löschen kann.

13. Client eines Domänennamensystems, DNS, wobei der Client Folgendes umfasst:
eine Einheit, die eine DNS-Datensatzanforderung zum Abfragen nach einem Datensatz an einen Server senden kann und eine Antwortnachricht von dem Server empfangen kann, wobei die Antwortnachricht den durch den Client angeforderten Datensatz und einen Wert der Lebensdauer, TTL, des Datensatzes umfasst und wobei der Wert der TTL dazu verwendet wird, die Gültigkeitsdauer des Datensatzes zu identifizieren;
eine erste Einheit, die eine Benachrichtigungsnachricht von dem Server empfangen kann, wenn der Server bestimmt, dass der Datensatz in dem Server aktualisiert worden ist, falls der in einem lokalen Pufferbereich des Clients gespeicherte Datensatz in der Gültigkeitsdauer liegt, wobei die Benachrichtigungsnachricht Informationen, um die Benachrichtigungsnachricht zu identifizieren und um anzugeben, dass der Datensatz aktualisiert worden ist, und den aktualisierten Datensatz enthält,
eine zweite Einheit, die gemäß der Benachrichtigungsnachricht den entsprechenden Datensatz in dem lokalen Pufferbereich löschen kann und den aktualisierten Datensatz in dem lokalen Pufferbereich speichern kann.

14. Client nach Anspruch 13, der ferner Folgendes umfasst:
eine dritte Einheit, die die Benachrichtigungsnachricht speichern kann, wobei die zweite Einheit ferner gemäß der in der dritten Einheit gespeicherten Benachrichtigungsnachricht den entsprechenden Datensatz in dem lokalen Pufferbereich löschen kann.

15. Client nach Anspruch 13 oder 14, der ferner Folgendes umfasst:
eine vierte Einheit, die den durch den Server aktualisierten in der Benachrichtigungsnachricht enthaltenen Datensatz in dem lokalen Pufferbereich speichern kann.

16. Client nach Anspruch 13 oder 14 oder 15, wobei die erste Einheit ferner Folgendes umfasst:
eine fünfte Einheit, die die "Notify"-Nachricht von dem Server empfangen kann,
wobei die "Notify"-Nachricht Folgendes umfasst: ein Bestätigungsfeld, ein Identifizierungsfeld und einen Informationsabschnitt, und wobei der Inhalt des Bestätigungsfelds dafür verwendet wird zu überprüfen, ob die "Notify"-Nachricht gültig ist, und wobei der Inhalt des Identifizierungsfelds dafür verwendet wird zu überprüfen, ob der entsprechende Datensatz in dem lokalen Pufferbereich aktualisiert werden muss, und wobei der Informationsabschnitt zum Speichern des aktualisierten Datensatzes verwendet wird.

17. Client nach Anspruch 16, wobei die zweite Einheit Folgendes umfasst:
eine erste Teileinheit, die auf der Grundlage des Inhalts des Bestätigungsfelds in der "Notify"-Nachricht überprüfen kann, ob die "Notify"-Nachricht gültig ist;
eine zweite Teileinheit, die den Inhalt des Identifizierungsfelds in der "Notify"-Nachricht in Identifizierungsinformationen in dem Client umsetzen kann, falls die "Notify"-Nachricht gültig ist, wobei die Identifizierungsinformationen dem Inhalt des Identifizierungsfelds entsprechen; und
eine dritte Teileinheit, die auf der Grundlage der Identifizierungsinformationen abfragen kann, ob der entsprechende Datensatz in dem lokalen Pufferbereich des Clients gespeichert ist;
eine vierte Teileinheit, die den entsprechenden Datensatz in dem lokalen Pufferbereich löschen kann, falls der entsprechende Datensatz in dem lokalen Pufferbereich des Clients gespeichert ist.

18. Server eines Domänennamensystems, DNS, wobei der Server Folgendes umfasst:
eine Einheit, die von einem Client eine DNS-Datensatzanforderung zum Abfragen nach einem Datensatz empfangen kann; und eine Antwortnachricht an den Client senden kann, falls der Server den durch den Client angeforderten Datensatz findet,
wobei die Antwortnachricht den durch den Client angeforderten Datensatz und einen Wert der Lebensdauer, TTL, des Datensatzes umfasst und wobei der Wert der TTL dazu verwendet wird, die Gültigkeitsdauer des Datensatzes zu identifizieren;
eine erste Einheit, die bestimmen kann, ob der Datensatz innerhalb der Gültigkeitsdauer des in einem lokalen Pufferbereich des Clients gespeicherten Datensatzes in dem Server aktualisiert worden ist;
eine zweite Einheit, die Informationen in eine Benachrichtigungsnachricht schreiben kann, um die Benachrichtigungsnachricht zu identifizieren und um anzugeben, dass der Datensatz aktualisiert worden ist, und die den aktualisierten Datensatz in die Benachrichtigungsnachricht schreibt, wenn die erste Einheit bestimmt, dass der Datensatz in dem Server aktualisiert worden ist, falls der in dem lokalen Pufferbereich des Clients gespeicherte Datensatz in der Gültigkeitsdauer liegt; und
eine dritte Einheit, um die Benachrichtigungsnachricht an einen Client zu senden,
wobei die Benachrichtigungsnachricht Informationen, um die Benachrichtigungsnachricht zu identifizieren und um anzugeben, dass der Datensatz aktualisiert worden ist, und Daten des aktualisierten Datensatzes enthält, so dass der Client gemäß der Benachrichtigungsnachricht den entsprechenden Datensatz in dem lokalen Pufferbereich des Clients löscht und die Daten des aktualisierten Datensatzes in dem lokalen Pufferbereich speichert.

## Revendications

1. Procédé pour mettre en oeuvre une synchronisation de données entre un serveur et un client dans un mécanisme de système de nom de domaine, DNS, comprenant les étapes suivantes :
recevoir, par un serveur, une demande d'enregistrement DNS pour rechercher un enregistrement depuis un client ;
envoyer, par le serveur, un message de réponse au client si le serveur trouve l'enregistrement demandé par le client, où le message de réponse comprend l'enregistrement demandé par le client et une valeur de temps à vivre, TTL, de l'enregistrement, et la valeur de TTL est utilisée pour identifier la période de validité de l'enregistrement ;
déterminer (100, 200), par le serveur, si l'enregistrement est mis à jour dans le serveur dans la période de validité de l'enregistrement stocké dans une zone tampon locale du client ;
envoyer (101, 201), par le serveur, un message de notification au client lors de la détermination que l'enregistrement est mis à jour dans le serveur, si l'enregistrement stocké dans la zone tampon locale du client se situe dans la période de validité, où le message de notification contient des informations pour identifier le message de notification et indiquer que l'enregistrement est mis à jour, et l'enregistrement mis à jour, de manière à ce que le client efface (102, 205) l'enregistrement correspondant dans la zone tampon locale et stocke l'enregistrement mis à jour dans la zone tampon locale conformément au message de notification.

2. Procédé selon la revendication 1, comprenant en outre les étapes suivantes :
stocker (207) le message de notification dans le client ; où
le processus d'effacement (205) de l'enregistrement correspondant dans la zone tampon locale conformément au message de notification comprend l'étape suivante :
effacer (205) l'enregistrement correspondant dans la zone tampon locale conformément au message de notification stocké dans le client.

3. Procédé selon l'une quelconque des revendications 1 à 2, dans lequel le message de notification est un message Notify ; et
le message Notify comprend : un champ de confirmation, un champ d'identification et une section d'informations, où le contenu du champ de confirmation est utilisé pour vérifier si le message Notify est valide, et le contenu du champ d'identification est utilisé pour vérifier si l'enregistrement correspondant se trouve dans la zone tampon locale dont la mise à jour est requise, et la section d'informations est utilisée pour stocker l'enregistrement mis à jour.

4. Procédé selon la revendication 3, dans lequel le processus comprenant d'effacer (205) l'enregistrement correspondant dans la zone tampon locale conformément au message de notification comprend les étapes suivantes :
vérifier (202) si le message Notify est valide sur la base du contenu du champ de confirmation dans le message Notify ;
convertir (204) le contenu du champ d'identification dans le message Notify en des informations d'identification dans le client si le message Notify est valide, où les informations d'identification correspondent au contenu du champ d'identification ; et
rechercher (204) si l'enregistrement correspondant est stocké dans la zone tampon locale du client sur la base des informations d'identification ;
effacer (205) l'enregistrement correspondant dans la zone tampon locale si l'enregistrement correspondant est stocké dans la zone tampon locale du client.

5. Procédé selon la revendication 4, comprenant en outre les étapes suivantes :
écarter (206), par le client, le message Notify lors de la détermination que le message Notify est non valide ; ou
répondre (203) au message Notify contenant un code d'erreur dans le champ de confirmation du message Notify au niveau du serveur lors de la détermination que le message Notify est non valide.

6. Procédé selon la revendication 3, dans lequel les informations d'identification comprennent : un nombre, un segment de nombre ou un nom de domaine.

7. Procédé selon la revendication 3, dans lequel le champ de confirmation comprend au moins un champ parmi un champ Opcode, un champ QR, un champ QTYPE et un champ RCODE.

8. Procédé selon la revendication 3, dans lequel le champ d'identification comprend un champ QNAME d'une section Question; et le contenu du champ d'identification comprend un nom de domaine ou une adresse IP.

9. Procédé selon la revendication 3, dans lequel la section d'informations comprend une section Answer, une section Authority et une section Additional.

10. Procédé selon l'une quelconque des revendications 1 à 9, dans lequel le processus comprenant de déterminer (100, 200) que l'enregistrement est mis à jour comprend les étapes suivantes :
déterminer que l'enregistrement est mis à jour dans le serveur lorsqu'il a été reçu un message Notify délivré par un autre serveur pour indiquer que l'enregistrement est mis à jour ; ou
déterminer que l'enregistrement est mis à jour dans le serveur si une mise à jour se produit dans un système du propre serveur.

11. Système pour mettre en oeuvre une synchronisation de données entre un serveur et un client dans un mécanisme de système de nom de domaine, DNS, comprenant un serveur et un client, **caractérisé en ce que** :
le serveur est capable de recevoir une demande d'enregistrement DNS pour rechercher un enregistrement depuis le client, d'envoyer un message de réponse au client si le serveur trouve l'enregistrement demandé par le client, où le message de réponse comprend l'enregistrement demandé par le client et une valeur de temps à vivre, TTL, de l'enregistrement, et la valeur de TTL est utilisée pour identifier la période de validité de l'enregistrement ; de déterminer si l'enregistrement est mis à jour dans le serveur dans la période de validité de l'enregistrement stocké dans une zone tampon locale du client ;
d'envoyer un message de notification au client lors de la détermination que l'enregistrement est mis à jour dans le serveur, si l'enregistrement stocké dans la zone tampon locale du client se situe dans la période de validité, et le message de notification contient des informations pour identifier le message de notification et indiquer que l'enregistrement est mis à jour, et
l'enregistrement mis à jour ; et
le client est capable d'envoyer la demande d'enregistrement pour rechercher l'enregistrement au serveur, de recevoir le message de réponse depuis le serveur, où le message de réponse comprend l'enregistrement demandé par le client et la valeur de TTL de l'enregistrement, et
la valeur de TTL est utilisée pour identifier la période de validité de l'enregistrement et
d'effacer l'enregistrement correspondant dans la zone tampon locale et de stocker l'enregistrement mis à jour dans la zone tampon locale conformément au message de notification reçu du serveur.

12. Système selon la revendication 11, dans lequel le client est en outre capable de stocker le message de notification, et d'effacer l'enregistrement correspondant dans la zone tampon locale conformément au message de notification stocké dans le client.

13. Client d'un système de nom de domaine, DNS, comprenant :
une unité capable d'envoyer une demande d'enregistrement DNS pour rechercher un enregistrement au niveau d'un serveur, et recevoir un message de réponse depuis le serveur,
où le message de réponse comprend l'enregistrement demandé par le client et une valeur de temps à vivre, TTL, de l'enregistrement, et la valeur de TTL est utilisée pour identifier la période de validité de l'enregistrement ;
une première unité capable de recevoir un message de notification depuis le serveur lors de la détermination par le serveur que l'enregistrement est mis à jour dans le serveur si l'enregistrement stocké dans une zone tampon locale du client se situe dans la période de validité, où le message de notification contient des informations pour identifier le message de notification et indiquer que l'enregistrement est mis à jour, et l'enregistrement mis à jour,
une deuxième unité capable d'effacer l'enregistrement correspondant dans la zone tampon locale et de stocker l'enregistrement mis à jour dans la zone tampon locale conformément au message de notification.

14. Client selon la revendication 13, comprenant en outre :
une troisième unité capable de stocker le message de notification, où la deuxième unité est en outre capable d'effacer l'enregistrement correspondant dans la zone tampon locale conformément au message de notification stocké dans la troisième unité.

15. Client selon la revendication 13 ou la revendication 14, comprenant en outre :
une quatrième unité capable de stocker l'enregistrement mis à jour par le serveur contenu dans le message de notification dans la zone tampon locale.

16. Client selon la revendication 13 ou la revendication 14 ou la revendication 15, dans lequel la première unité comprend :
une cinquième unité capable de recevoir le message Notify depuis le serveur, où le message Notify comprend : un champ de confirmation, un champ d'identification et une section d'informations, et le contenu du champ de confirmation est utilisé pour vérifier si le message Notify est valide, et le contenu du champ d'identification est utilisé pour vérifier si l'enregistrement correspondant dont la mise à jour est requise se trouve dans la zone tampon locale, et la section d'informations est utilisée pour stocker l'enregistrement mis à jour.

17. Client selon la revendication 16, dans lequel la deuxième unité comprend :
une première sous-unité, capable de vérifier si le message Notify est valide sur la base du contenu du champ de confirmation dans le message Notify ;
une deuxième sous-unité capable de convertir le contenu du champ d'identification dans le message Notify en des informations d'identification dans le client si le message Notify est valide, où les informations d'identification correspondent au contenu du champ d'identification ; et
une troisième sous-unité capable de rechercher si l'enregistrement correspondant est stocké dans la zone tampon locale du client sur la base des informations d'identification ;
une quatrième sous-unité capable d'effacer l'enregistrement correspondant dans la zone tampon locale si l'enregistrement correspondant est stocké dans la zone tampon locale du client.

18. Serveur de système de nom de domaine, DNS, comprenant :
une unité, capable de recevoir une demande d'enregistrement DNS pour rechercher un enregistrement depuis un client ; et d'envoyer un message de réponse au client si le serveur trouve l'enregistrement demandé par le client, où le message de réponse comprend l'enregistrement demandé par le client et une valeur de temps à vivre, TTL, de l'enregistrement, et la valeur de TTL est utilisée pour identifier la période de validité de l'enregistrement ;
une première unité, capable de déterminer si l'enregistrement est mis à jour dans le serveur dans la période de validité de l'enregistrement stocké dans une zone tampon locale du client ;
une deuxième unité, capable d'écrire des informations dans un message de notification pour identifier le message de notification et indiquer que l'enregistrement est mis à jour et écrire l'enregistrement mis à jour dans le message de notification lorsque la première unité détermine que l'enregistrement est mis à jour dans le serveur, si l'enregistrement stocké dans la zone tampon locale du client se situe dans la période de validité ; et
une troisième unité, pour envoyer le message de notification à un client, où le message de notification contient des informations pour identifier le message de notification et indiquer que l'enregistrement est mis à jour, et des données de l'enregistrement mis à jour, de manière à ce que le client efface l'enregistrement correspondant dans la zone tampon locale du client et stocke les données de l'enregistrement mis à jour dans la zone tampon locale conformément au message de notification.
